# EUROPEAN PATENT SPECIFICATION

(11) **EP 4 261 996 B1**
(45) Date of publication and mention of the grant of the patent: **18.09.2024**
(21) Application number: 23176266.7
(22) Date of filing: 28.01.2021
(51) Int. Cl.: H01M 50/238, H01M 10/0525, H01M 10/054, H01M 50/202, H01M 50/209, H01M 50/24, H01M 50/571, H01M 50/588, H01M 50/591, H01M 50/103, H01M 50/124, H01M 50/141, H01M 50/249

(54) **INSULATING FILM, BATTERY CELL, BATTERY AND POWER CONSUMPTION DEVICE**
ISOLATIONSFILM, BATTERIEZELLE, BATTERIE UND STROMVERBRAUCHSVORRICHTUNG
FILM ISOLANT, CELLULE DE BATTERIE, BATTERIE ET DISPOSITIF DE CONSOMMATION D'ÉNERGIE

(43) Date of publication of application: 18.10.2023
(62) Divisional of application: 21810513.8
(73) Proprietor: Contemporary Amperex Technology Co., Limited, Jiaocheng District Ningde City Fujian 352100 (CN)
(72) Inventor: CHEN, Xin, Ningde City Fujian 352100 (CN); GE, Xiaoming, Ningde City Fujian 352100 (CN); MA, Ruoyan, Ningde City Fujian 352100 (CN); WANG, Yiheng, Ningde City Fujian 352100 (CN)
(74) Representative: Pfenning, Meinig & Partner mbB

(56) References cited:
- CN-A- 107 706 326
- US-A1- 2013 034 764
- US-A1- 2017 250 388

## Description

### TECHNICAL FIELD

The present application relates to the field of battery technologies, and in particular, to an insulating film, a battery cell, a battery, a power consumption device, and a method and device for producing a battery cell.

### BACKGROUND

With the aggravation of environmental pollution, new energy industry is attracting more and more attention. As an important part of many electronic products, energy storage products and electric vehicles, the performance of a lithium battery will directly affect the promotion and the use of related products. According to an outsourcing material of the lithium battery, the lithium battery can be mainly classified into two types: a metal casing battery cell and a soft wrapping battery cell.

For the metal casing battery cell, in order to insulate and isolate the metal casing from the outside world, it is usually necessary to wrap the metal casing with an insulating film.

However, a current insulating film may not be able to realize the sealed wrapping of a wrapping area when wrapping a battery cell. The current insulation film usually has the problem of water permeability after wrapping the battery, resulting in poor waterproof performance of the insulating film.

US2013/034764A1 discloses an electrically insulating film, in which the first side surface covering portion includes a main-surface-side covering portion, and a side-surface-side covering portion. The protruding width of the main-surface-side covering portion is dimensioned equal to the protruding width of the side-surface-side covering portion. The superposed part of the first and second side surface covering portions is welded and made watertight.

CN107706326A discloses a battery protection piece. The battery protection piece comprise a plurality of protection regions and a plurality of folding regions, wherein the protection piece is of an integrated structure, an accommodating cavity matched with the shape of a battery is formed when the protection piece is folded along the folding regions according to a preset mode so as to wrap and accommodate the battery, the thicknesses of the folding regions are lower than those of the protection regions, and the flexibility of the folding regions is higher than that of the protection region.

US2017/250388A1 discloses a rectangular secondary battery in which six faces of a battery container are covered with one sheet of insulating film. Ends of the insulating film are overlapped with each other, and the insulating film continuously covers mutually adjacent faces having each of ridges between the faces of the battery container.

### SUMMARY

The present application provides an insulating film, a battery cell, a battery, a power consumption device, and a method and device for producing a battery cell, which can realize the sealed wrapping of a wrapping area.

In a first aspect, an insulating film is provided, which is configured to wrap a battery assembly, the insulating film includes a bottom coverage area, N side coverage areas and N pairs of bonding areas, wherein N is an integer larger than 2; the bottom coverage area has N sides, the N side coverage areas are respectively connected to the bottom coverage area outside the N sides, and can respectively bend toward the bottom coverage area along the N sides; each pair of the N pairs of bonding areas is located between two adjacent side coverage areas of the N side coverage areas, and is connected to the two adjacent side coverage areas respectively; each pair of bonding areas is configured to make the bottom coverage area and the N sides coverage areas form a space wrapping the battery assembly by bonding surfaces on the same side of each pair of bonding areas when the N sides coverage areas bend toward the bottom coverage area; wherein a width of a first bonding area in each pair of bonding areas is greater than a width of a second bonding area, and after bonding, each pair of bonding areas can bend toward the side coverage area adjacent to the second bonding area, wherein a part that is not bonded with the second bonding area in the first bonding area is configured to bond to the side coverage area adjacent to the second bonding area..

In the technical solution of the embodiments of the present application, each pair of bonding areas is smoothly bonded without insufficient bonding areas, and there is no refolding inside the bonding area, so it is possible to realize the sealed wrapping of the wrapping area, which can improve the insulation performance and the waterproof performance. In this way, each pair of bonding areas can be prevented from tilting, which facilitates subsequent assembly and guarantees the wrapping effect.

In a possible implementation manner, each pair of bonding areas can respectively bend along the connecting side with the side coverage area to bond the surfaces on the same side of each pair of bonding areas. By bending along the connecting side, the bonding of the surfaces on the same side of each pair of bonding areas can be achieved, and there is no need to refold inside the bonding area, so a sealing effect can be ensured.

In a possible implementation manner, N is 4, and the insulating film is configured to wrap a cuboid-shaped battery assembly.

In a possible implementation manner, the bottom coverage area and four side coverage areas are both rectangular, and the expanded state of the insulating film is a cross shape.

In a possible implementation manner, in the expanded state of the insulating film, each pair of bonding areas presents as an L shape.

In a possible implementation manner, the width of the first bonding area is less than one-half of the width of the side coverage area adjacent to the second bonding area. In this way, after each pair of bonding areas bonding to the side coverage area, a part of the area in the middle of the side coverage area will be exposed, that is, not covered by the bonding area. The exposed area in the middle of the side coverage area can be configured to bond with a side plate of a fixed battery cell, compared with the bonding area, the exposed area in the middle of the side coverage area has a better bonding effect when bonding with the side plate.

In a possible implementation manner, a material of the insulating film is a waterproof material. In this way, the waterproof performance of the battery assembly can be improved after the battery assembly is wrapped with the insulation film.

In a possible implementation manner, the battery assembly is the battery cell.

In a possible implementation manner, the battery assembly is a battery cell group, and the battery cell group assembly includes a plurality of adjacent battery cells. That is, a plurality of adjacent battery cells is wrapped with the above insulating film as a whole. For example, two battery cells are a group, and is wrapped with one insulating film. This can reduce the complexity of the wrapping and improve the assembly efficiency.

In a second aspect, a battery cell is provided, and the battery cell includes the insulating film in the above first aspect or any possible implementation manner of the first aspect.

In a possible implementation manner, N is 4, and the battery cell is a cuboid with a bottom wall, two wide side walls, two narrow side walls and a cover plate; wherein an area of the wide side wall is greater than that of the narrow side wall, the bottom coverage area of the insulating film covers the bottom wall, four side coverage areas of the insulating film include two wide side coverage areas and two narrow side coverage areas, wherein an area of the wide side coverage area is greater than that of the narrow side coverage area, the two wide side coverage areas cover the two wide side walls respectively, and the two narrow side coverage areas cover the two narrow side walls respectively; in each of the four pairs of bonding areas of the insulating film, the width of the first bonding area adjacent to the wide side coverage area is greater than the width of the second bonding area adjacent to the narrow side coverage area, and each pair of bonding areas bends to the adjacent narrow side coverage area after bonding on a surface towards one side of the battery cell; the part that is not bonded with the second bonding area in the first bonding area bonds to the adjacent narrow side coverage area.

In a third aspect, a battery is provided, including: the battery cell in the above second aspect or any one of the possible implementation manners of the second aspect.

In a fourth aspect, a power consumption device is provided, including: the battery in the above third aspect, the battery is configured to provide electrical energy.

In a fifth aspect, a method for producing a battery cell is provided, including: providing the battery cell; providing the insulating film in the above first aspect or any possible implementation manner of the first aspect; using the insulating film to wrap the battery cell.

In a sixth aspect, a device for producing a battery cell is provided, including a module for executing the method provided in the above fifth aspect.

### BRIEF DESCRIPTION OF DRAWINGS

In order to illustrate the technical solution in the embodiments of the present application more clearly, brief description will be made below to the drawings required in the embodiments of the present application. Apparently, the drawings described below are some embodiments of the present application only, and other drawings could be obtained based on these drawings by those ordinary skilled in this field without creative efforts.
FIG. 1 is a schematic diagram of a vehicle disclosed in an embodiment of the present application;
FIG. 2 is a schematic diagram of a battery disclosed in an embodiment of the present application;
FIG. 3 is a schematic diagram of a battery cell disclosed in an embodiment of the present application;
FIG. 4 is a schematic diagram of an insulating film disclosed in an embodiment of the present application;
FIG. 5 is a schematic diagram of a size of an insulating film disclosed in an embodiment of the present application;
FIGS. 6-9 are schematic diagrams of a wrapping state of an insulating film disclosed in an embodiment of the present application;
FIG. 10 is a schematic flowchart of a method for producing a battery cell disclosed in an embodiment of the present application;
FIG. 11 is a schematic block diagram of a device for producing a battery cell disclosed in an embodiment of the present application.

In the drawings, the drawings are not drawn to actual scale.

### DESCRIPTION OF EMBODIMENTS

Implementations of the present application will be further described below in detail with reference to the drawings and embodiments. The detailed description of the following embodiments and the accompanying drawings are used to exemplarily illustrate principles of the present application, but cannot be used to limit the scope of the present application, that is, the present application is not limited to the described embodiments.

In the depiction of the present application, it is noted that unless otherwise defined, all technological and scientific terms used have the same meanings as those commonly understood by those skilled in the art to which the present application belongs. The terms used are merely for the purpose of describing specific embodiments, but are not intended to limit the present application. The terms "including" and "having" and any variations thereof in the specification and the claims of the present application as well as the brief description of the drawings described above are intended to cover non-exclusive inclusion. "A plurality of' means more than two; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus may not be understood as a limitation the present application. In addition, the terms "first", "second", and "third" are only intended for the purpose of description, and shall not be understood as an indication or implication of relative importance. "Vertical" is not strictly vertical, but within an allowable range of error. "Parallel" is not strictly parallel, but within an allowable range of error.

The phrase "embodiments" referred to in the present application means that the descriptions of specific features, structures, and characteristics in combination with the embodiments are included in at least an embodiment of the present application. The phrase at various locations in the specification does not necessarily refer to the same embodiment, or an independent or alternative embodiment exclusive of another embodiment. Those skilled in the art understand, in explicit and implicit manners, that an embodiment described in the present application may be combined with another embodiment.

The terms representing directions in the following description are all directions shown in the drawings, and limit the specific structure of the present application. In the description of the present application, it should be further noted that unless otherwise explicitly specified and defined, the terms "mounting", "connecting" and "connection" should be understood in a broad sense; for example, they may be a fixed connection, a detachable connection, or an integrated connection; may be a direct connection and may also be an indirect connection through an intermediate medium, or may be communication between the interiors of two elements. Those of ordinary skill in the art may appreciate the specific meanings of the foregoing terms in the present application according to specific circumstances.

An insulating film of the embodiment of the present application can be configured to wrap a battery assembly. The insulating film can be an insulating and waterproof material for insulating and waterproofing the battery assembly. The battery assembly can be a battery cell, or an assembly formed by the battery cell, for example, a battery cell group formed by a plurality of adjacent battery cells. In this case, the plurality of adjacent battery cells is wrapped with the insulating film of the embodiment of the present application as a whole. For convenience of description, the following embodiment takes the battery cell as an example for illustration, but the present application is not limited to this.

In order to meet different power demands, a battery may include a plurality of battery cells, where the plurality of battery cells may be in series connection, parallel connection or series-parallel connection. The series-parallel connection refers to a combination of series connection and parallel connection. The battery may also be referred to as a battery pack. Optionally, the plurality of battery cells may be first connected in series, in parallel or in series-parallel to form a battery module, and then a plurality of battery modules are connected in series, in parallel or in series-parallel to form the battery. That is, the plurality of battery cells may directly form the battery, or may first form the battery module, and then the battery module form the battery. The battery is further provided in a power consumption device to provide electrical energy for the power consumption device.

The battery cell may include a lithium-ion secondary battery, a lithium-ion primary battery, a lithium-sulfur battery, a sodium/lithium-ion battery, a sodium-ion battery or a magnesium-ion battery, etc., which are not limited by the embodiments of the present application.

In order to insulate and isolate the battery cell from the outside world, it is usually necessary to wrap the battery cell with the insulating film. A wrapped insulating film can achieve the purpose of insulation and waterproofing at the same time. However, a current insulating film may not be able to realize the sealed wrapping of a wrapping area when wrapping the battery cell, resulting in poor waterproof performance of the insulating film. For example, at present, when the battery cell is wrapped with the insulating film, on the one hand, a thickness of a bonding surface may be inconsistent (for example, a part of the bonding surface is one layer and the other part is two layers), that is, the bonding surface is unsmooth, which may affect the bonding effect; on the other hand, the inside of an area after bonding may bend again, which may also affect the bonding effect, so that the sealed wrapping of the wrapping area cannot be realized.

In view of this, embodiments of the present application provide an insulating film, each pair of bonding areas is smoothly bonded without insufficient bonding when wrapping the battery cell, and there is no refolding inside the bonding area, so it is possible to realize the sealed wrapping of the wrapping area, which can improve the insulation performance and the waterproof performance.

The technical solutions described in the embodiments of the present application are all applicable to various apparatuses using batteries, such as mobile phones, portable devices, notebook computers, electromobiles, electronic toys, electric tools, electric vehicles, ships and spacecrafts. For example, the spacecrafts include airplanes, rockets, space shuttles and spaceships, and the like. For brief description, the following embodiments are all described by an example of an electric vehicle.

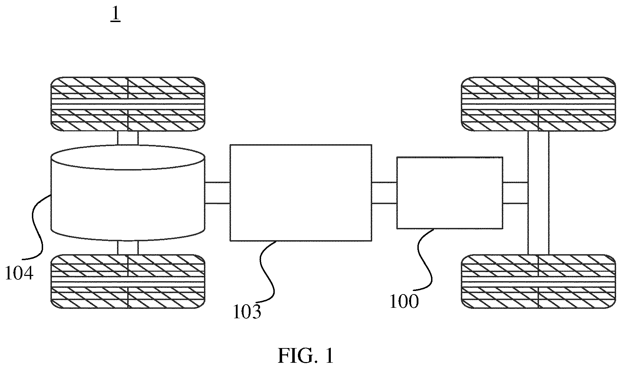

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. The vehicle 1 may be internally provided with a motor 104, a controller 103 and a battery 100, and the controller 103 is configured to control the battery 100 to supply power to the motor 104. For example, the battery 100 may be disposed at the bottom, head or tail of the vehicle 1. The battery 100 may be configured for power supply of the vehicle 1. For example, the battery 100 may serve as an operation power source of the vehicle 1 for a circuit system of the vehicle 1, for example, for a working power demand of the vehicle 1 during startup, navigation and running. In another embodiment of the present application, the battery 100 may be configured not only as an operation power supply of the vehicle 1, but also as a driving power supply of the vehicle 1, replacing or partially replacing fuel or natural gas to provide driving power for the vehicle 1.

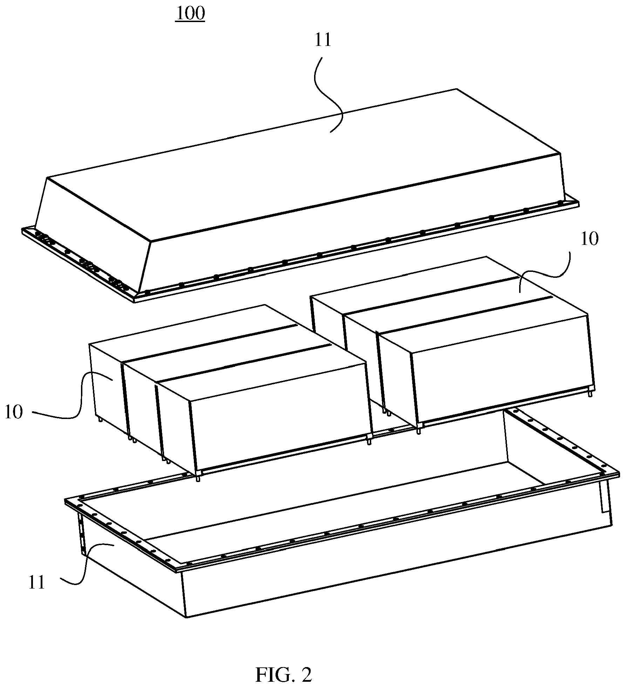

In order to satisfy different power demands, the battery 100 may include a plurality of battery cells. For example, as shown in FIG. 2, it is a schematic structural diagram of a battery 100 according to an embodiment of the present application. The battery 100 may include a plurality of battery cells 10. The battery 100 may further include a box body 11 with a hollow structure inside, and the plurality of battery cells 10 are accommodated in the box body 11. For example, the plurality of battery cells 10 are connected in series or in parallel or in a hybrid and are then placed in the box body 11.

Optionally, the battery 100 may also include other structures, which will not be described in detail herein. For example, the battery 100 may also include a bus component. The bus component is configured to implement the electrical connection between the plurality of battery cells 10, such as parallel connection, series connection or series-parallel connection. Specifically, the bus component may implement the electrical connection between the battery cells 10 by connecting electrode terminals of the battery cells 10. Further, the bus component may be fixed to the electrode terminals of the battery cells 10 by means of welding. Electric energy of the plurality of battery cells 10 may be further led out through an electrically conductive mechanism passing through the box body. Optionally, the electrically conductive mechanism may also belong to the bus component.

According to different power requirements, the number of the battery cells 10 may be set as any value. The plurality of battery cells 10 may be connected in series or in parallel or in a hybrid manner to implement larger capacity or power. Since there may be many battery cells 10 included in each battery 100, the battery cells 10 may be provided in groups for convenience of installation, and each group of battery cells 10 constitutes a battery module. The number of the battery cells 10 included in the battery module is not limited and may be set as required. The battery 100 may include a plurality of battery modules, and these battery modules may be connected in series, in parallel or in series and parallel.

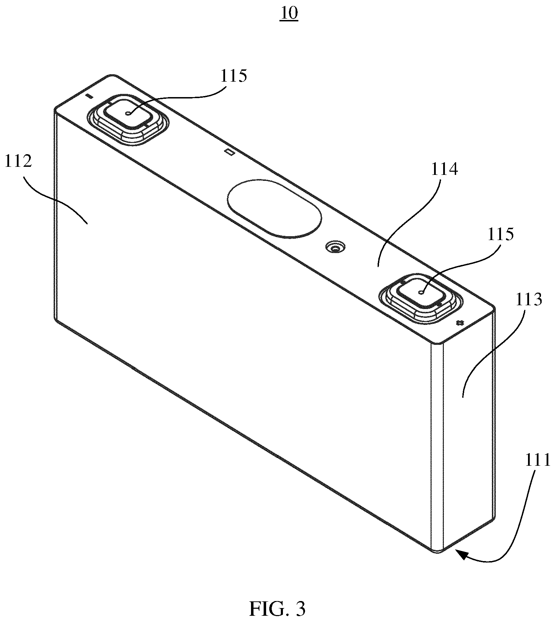

FIG. 3 is a schematic diagram of a battery cell 10 in an embodiment of the present application. FIG. 3 takes an example that a battery cell 10 is cuboid, but this is not limited by the embodiment of the present application, that is, the battery cell may also have other shapes.

As shown in FIG. 3, a battery cell 10 has six walls, that is, a bottom wall 111, two wide side walls 112, two narrow side walls 113 and a cover plate 114. A chamber formed by the six walls is provided with an electrode assembly and electrolyte and the like of the battery cell in it. Two electrode terminals 115 are provided on the cover plate 114, which are a positive electrode terminal and a negative electrode terminal respectively, and the electrode terminals 115 are electrically connected to the electrode assembly.

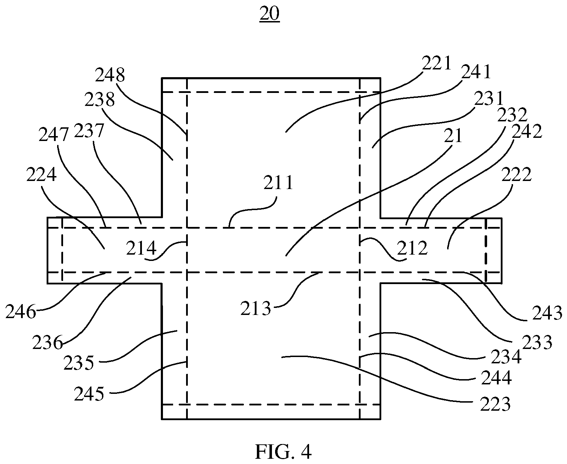

FIG. 4 shows a schematic diagram of an insulating film 20 according to an embodiment of the present application. As shown in FIG. 4, the insulating film 20 includes a bottom coverage area 21, N side coverage areas 221-224 and N pairs of bonding areas 231-238. N is an integer greater than 2. FIG. 4 takes an example that N is 4, but this is not limited by the embodiment of the present application. Specifically, when N is 4, the insulating film 20 can be configured to wrap a cuboid-shaped battery assembly, such as the battery cell 10 shown in FIG. 3; when N is not 4, the insulating film 20 can be used for wrapping an N prismatic-shaped battery assembly. Optionally, in the case that the battery cell 10 shown in FIG. 3 is wrapped, the side coverage areas 221 and 223 are wide side coverage areas, and the side coverage areas 222 and 224 are narrow side coverage areas.

The bottom coverage area 21 has N sides 211-214, and the N side coverage areas 221-224 are respectively connected to the bottom coverage area 21 at the N sides 211-214, and can bend toward the bottom coverage area 21 along the N sides 211-214 respectively. In other words, N side coverage areas 221-224 surround the bottom coverage area 21, and each side coverage area can bend along its side connected to the bottom coverage area 21. As shown in FIG. 4, the side coverage area 221 can bend along the side 211, the side coverage area 222 can bend along the side 212, the side coverage area 223 can bend along the side 213, and the side coverage area 224 can bend along the side 214.

Each pair of the N pairs of bonding areas 231-238 is located between two adjacent side coverage areas of the N side coverage areas 221-224, and is connected to the two adjacent side coverage areas respectively; each pair of bonding areas is configured to make the bottom coverage area 21 and the N sides coverage areas 221-224 form a space wrapping the battery assembly by bonding surfaces on the same side of each pair of bonding areas when the N sides coverage areas 221-224 bend toward the bottom coverage area 21.

As shown in FIG. 4, a pair of bonding areas 231-232 is located between the side coverage area 221 and the side coverage area 222, the bonding area 231 is connected to the side coverage area 221, and the bonding area 232 is connected to the side coverage area 222; a pair of bonding areas 233-234 is located between the side coverage area 222 and the side coverage area 223, the bonding area 233 is connected to the side coverage area 222, and the bonding area 234 is connected to the side coverage area 223; a pair of bonding areas 235-236 is located between the side coverage area 223 and the side coverage area 224, the bonding area 235 is connected with the side coverage area 223, and the bonding area 236 is connected with the side coverage area 224; a pair of bonding areas 237-238 is located between the side coverage area 224 and the side coverage area 221, the bonding area 237 is connected to the side coverage area 224, and the bonding area 238 is connected to the side coverage area 221.

When the side coverage areas 221-224 bend toward the bottom coverage area 21, the surfaces on the same side of the bonding area 231 and the bonding area 232 (a side toward the battery cell) are bonded. Similarly, the bonding area 233 and the bonding area 234 are bonded, the bonding area 235 and the bonding area 236 are bonded, and the bonding area 237 and the bonding area 238 are bonded, so that the bottom coverage area 21 and the side coverage areas 221-224 form a space for wrapping the battery assembly.

Optionally, when N is 4, the bottom coverage area 21 and four side coverage areas 221-224 are both square, and the expanded state of the insulating film 20 is a cross shape. Optionally, in the expanded state of the insulating film 20, each pair of bonding areas presents as an L shape. As shown in FIG. 4, the bonding area 231 and the bonding area 232 form an L shape, the bonding area 233 and the bonding area 234 form an L shape, the bonding area 235 and the bonding area 236 form an L shape, and the bonding area 237 and the bonding area 238 form an L shape.

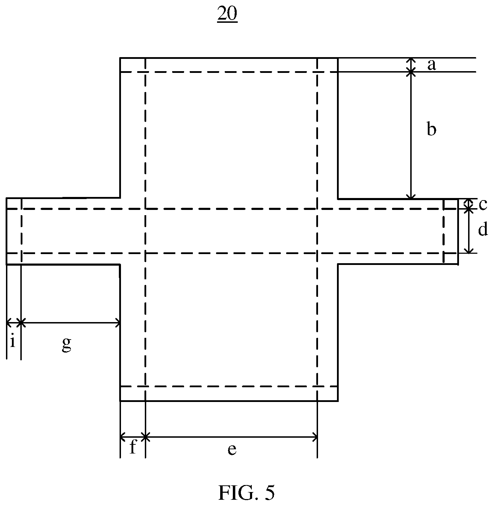

Optionally, as an example, if a length of a wrapped cuboid-shaped battery cell is L, a height is H, and a width is T, sizes of each section of the insulating film 20 in FIG. 5 can adopt the sizes in Table 1.

**Table 1**

| | Value Range /mm |
|---|---|
| a | 0∼5 |
| b | H-c |
| c | 2∼T-1 |
| d | T |
| e | L |
| f | 4∼L |
| g | H-f |
| i | 0∼5 |

Optionally, each pair of bonding areas may respectively bend along the connecting side with the side coverage area to bond surfaces on the same side of each pair of bonding areas. For example, the bonding area 231 can bend along the side 241, the bonding area 232 can bend along the side 242, the bonding area 233 can bend along the side 243, the bonding area 234 can bend along the side 244, the bonding area 235 can bend along the side 245, the bonding area 236 can bend along the side 246, the bonding area 237 can bend along the side 247, and the bonding area 238 can bend along the side 248.

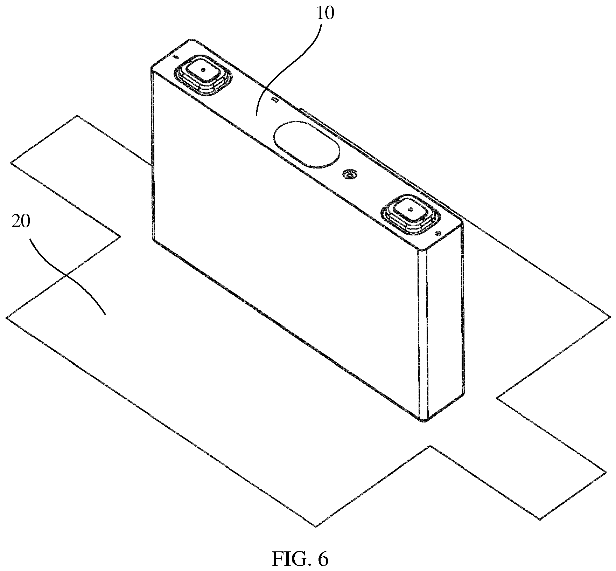

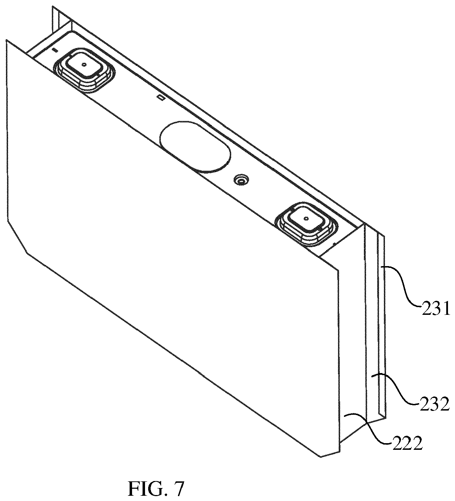

Taking the battery cell including the one shown in FIG. 3 as an example, FIG. 6 is a schematic diagram before wrapping, and FIG. 7 is a schematic diagram after each pair of bonding areas is bonded. As shown in Figure 7, after each pair of bonding areas are bonded, the sealing of one edge of the wrapping area can be realized. One pair of bonding areas of the sealing interface at each edge are smoothly bonded without insufficient bonding, so the sealed wrapping of the wrapping area can be realized.

Optionally, in an embodiment of the present application, a width of a first bonding area in each pair of bonding areas is greater than a width of a second bonding area, and after bonding, each pair of bonding areas can bend toward the side coverage area adjacent to the second bonding area, wherein a part that is not bonded with the second bonding area in the first bonding area is configured to bond to the side coverage area adjacent to the second bonding area.

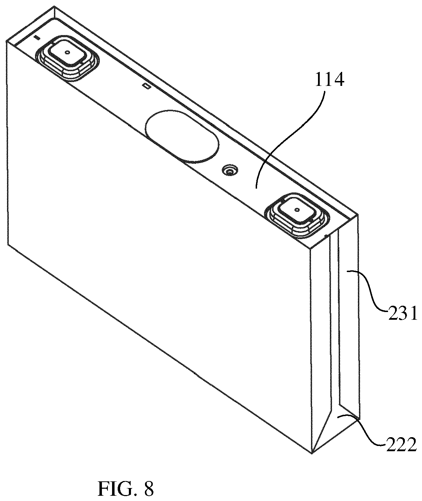

For example, for the bonding area 231 and the bonding area 232, a width of the bonding area 231 is greater than a width of the bonding area 232, that is, the bonding area 231 is the first bonding area, and the bonding area 232 is the second bonding area. As shown in FIG. 7, after the bonding area 231 and the bonding area 232 are bonded, they can bend toward the side coverage area 222. Since the width of the bonding area 231 is greater than the width of the bonding area 232, a part of the bonding area 231 will not be bonded to the bonding area 232, and this part of the area can be configured to bond to the side coverage area 222 again, so that to prevent the bonding area 231 and the bonding area 232 from tilting. Other bonding areas are similar to this, and the schematic diagram after bonding is shown in FIG. 8.

In the embodiment of the present application, each pair of bonding areas bents toward the side coverage area bonding as a whole after bonding, and there is no folding inside the bonding area, so that the sealing effect can be ensured. For example, if the inside of the bonding area is refolded, the bonding at a crease may be loosened, thereby affecting the sealing effect.

Optionally, in an embodiment of the present application, the width of the first bonding area is less than one-half of the width of the side coverage area adjacent to the second bonding area. For example, in FIG. 5, f is less than d/2.

Still taking the bonding area 231 as the first bonding area and the bonding area 232 as the second bonding area as an example, the width of the bonding area 231 is less than one-half of the width of the side coverage area 222. As shown in FIG. 8, in this case, after the bonding area 231 and the bonding area 232 are bonded and then bonded to the side coverage area 222 again, a part of the middle of the side coverage area 222 will be exposed, that is, it is not covered by the bonding area 231 and the bonding area 232 cover. The exposed area in the middle of the side coverage area 222 can be configured to bond with a side plate of a fixed battery cell; compared with the bonding area 231, the exposed area 222 in the middle of the side coverage area has a better bonding effect when bonding with the side plate.

Optionally, in an embodiment of the present application, a height of the side coverage area may be equal to or higher than a height of the battery cell. When the height of the side coverage area is higher than the height of the battery cell, the higher part can bend toward the cover plate of the battery cell and bond with the surface of the cover plate of the battery cell.

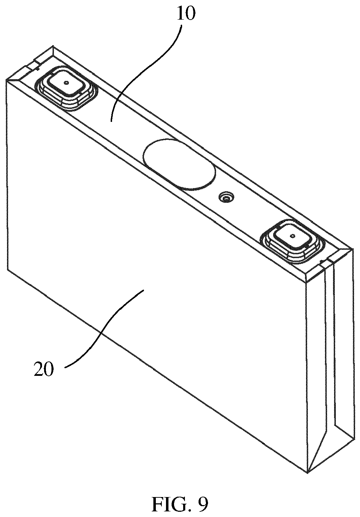

As shown in FIG. 8, the height of the side coverage areas 221-224 is higher than the height of the battery cell 10. The higher part then bends toward the cover plate 114 of the battery cell 10 and bonds with the surface of the cover plate 114 of the battery cell 10, so as to obtain the wrapping state as shown in FIG. 9.

In the technical solution of the embodiment of the present application, all the bonding areas are smoothly bonded without insufficient bonding, and there is no refolding inside the bonding area, so it is possible to realize the sealed wrapping of the wrapping area, which can improve the insulation performance and the waterproof performance.

An embodiment of the present application also provides a battery cell wrapped with the above insulating film 20. For example, the battery cell may be the above battery cell 10. In this case, the bottom coverage area 21 of the insulating film 20 covers the bottom wall 111 of the battery cell 10, four side coverage areas of the insulating film include two wide side coverage areas 221 and 233, and two narrow side coverage areas 222 and 224, two wide side coverage areas 221 and 223 cover the two wide side walls 112 respectively, and the two narrow side coverage areas 222 and 224 cover the two narrow side walls 113 respectively; in each of the four pairs of bonding areas of the insulating film 20, the width of the first bonding area adjacent to the wide side coverage area is greater than the width of the second bonding area adjacent to the narrow side coverage area, and each pair of bonding areas bends to the adjacent narrow side coverage area after bonding on a surface towards one side of the battery cell; the part that is not bonded with the second bonding area in the first bonding area bonds to the adjacent narrow side coverage area. The state of the battery cell 10 after wrapping with the insulating film 20 can be referred to FIG. 9.

The process of wrapping the battery cell 10 with the insulating film 20 will be described below with reference to FIGS. 6-9.

The battery cell 10 is placed on the insulating film 20, the bottom coverage area 21 of the insulating film 20 covers the bottom wall 111 of the battery cell 10, and the state shown in FIG. 6 is obtained.

The side coverage area bends along the side of the bottom coverage area 21 toward the battery cell 10, for example, the wide side coverage areas 221 and 223 can be firstly bended, and then bend the two narrow side coverage areas 222 and 224, at the same time, bend the bonding area along the connecting side between the bonding area and the side coverage area, so that surfaces of each pair of bonding areas towards the side of the battery unit 10 are bonded to obtain the state shown in Fig. 7.

Each pair of bonding areas bend to the adjacent narrow side coverage area as a whole and is bonded to the adjacent narrow side coverage area to obtain the state as shown in Fig. 8.

The part of cover plate 114 protruding from each area in the direction of cover plate 114 close to battery cell 10 is folded to make it bond to the surface of cover plate 114, and the final wrapping state is obtained as shown in Figure 9.

It should be understood that in the embodiment of the present application, a side configured to bend of the insulating film 20 can be pre-scribed before the bending of the insulating film 20, for example, to form a physical state such as a marking line or a weakened area. However, the insulating film 20 may not be subjected to any form of process before bending, but only bend according to the imaginary bending line during the bending process, and finally form a wrapping state.

It should also be understood that the relevant parts in each embodiment of the present application may be referred to each other, and for the sake of brevity, details are not described herein again.

An embodiment of the present application further provides a battery, which may include the battery cell 10 wrapped with the insulating film 20 in the above embodiments.

An embodiment of the present application further provides a power consumption device, which may include the battery in the above embodiments. Optionally, the power consumption device may be a vehicle, a ship or a spacecraft, etc., but this is not limited by the embodiment of the present application.

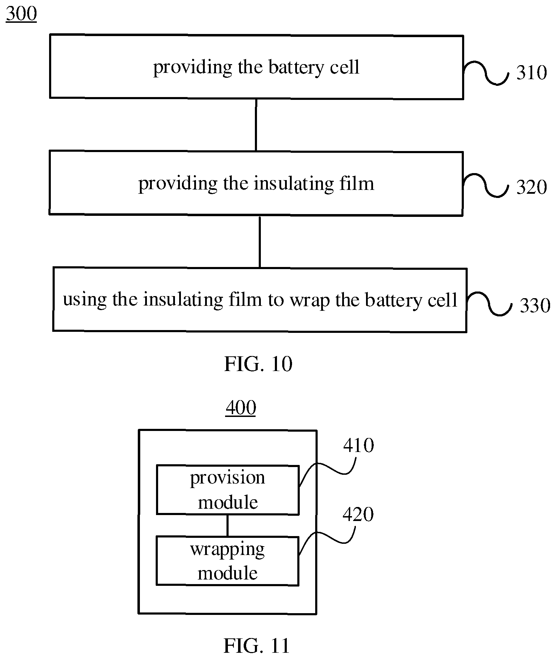

FIG. 10 shows a schematic flowchart of a method 300 for producing a battery cell according to an embodiment of the present application. As shown in FIG. 10, the method 300 may include:
310, providing the battery cell 10;
320, providing the insulating film 20;
330, using the insulating film 20 to wrap the battery cell 10.

FIG. 11 is a schematic block diagram of a device 400 for producing a battery cell according to an embodiment of the present application. As shown in FIG. 11, the device 400 may include: a provision module 410 and a wrapping module 420.

The provision module 410 is configured to provide the battery cell 10 and provide the insulating film 20; the wrapping module 420 is configured to use the insulating film 20 to wrap the battery cell 10.

For the parts that are not described in detail in the above method 300 and the device 400, reference is made to the foregoing embodiments, which will not be repeatedly described for brevity.

## Claims

1. An insulating film, being configured to wrap a battery assembly, wherein the insulating film comprises a bottom coverage area (21), N side coverage areas (221-224) and N pairs of bonding areas (231-238), N is an integer greater than 2;
the bottom coverage area (21) having N sides (211-214), and the N side coverage areas (221-224) being respectively connected to the bottom coverage area (21) at the N sides (211-214), and can bend toward the bottom coverage area (21) along the N sides (211-214) respectively;
each pair of the N pairs of bonding areas (231-238) being located between two adjacent side coverage areas of the N side coverage areas (221-224), and being connected to the two adjacent side coverage areas respectively; each pair of bonding areas is configured to make the bottom coverage area (21) and the N sides coverage areas (221-224) form a space wrapping the battery assembly by bonding surfaces on the same side of each pair of bonding areas when the N sides coverage areas (221-224) bend toward the bottom coverage area (21);
wherein a width of a first bonding area in each pair of bonding areas is greater than a width of a second bonding area, and after bonding, each pair of bonding areas can bend toward the side coverage area adjacent to the second bonding area, wherein the part that is not bonded with the second bonding area in the first bonding area is configured to bond to the side coverage area adjacent to the second bonding area.

2. The insulating film according to claim 1, wherein each pair of bonding areas can respectively bend along the connecting side with the side coverage area to bond the surfaces on the same side of each pair of bonding areas.

3. The insulating film according to claim 1, wherein N is 4, and the insulating film is configured to wrap a cuboid shaped battery assembly.

4. The insulating film according to claim 3, wherein the bottom coverage area (21) and four side coverage areas (221-224) are both rectangular, and the expanded state of the insulating film is a cross shape.

5. The insulating film according to claim 4, wherein in the expanded state of the insulating film, each pair of bonding areas presents as an L shape.

6. The insulating film according to claim 1, wherein the width of the first bonding area is less than one-half of the width of the side coverage area adjacent to the second bonding area.

7. The insulating film according to any one of claims 1 to 6, wherein a material of the insulating film is a waterproof material.

8. The insulating film according to any one of claims 1 to 7, wherein the battery assembly is a battery cell (10).

9. The insulating film according to any one of claims 1 to 7, wherein the battery assembly is a battery cell group, and the battery cell group assembly comprises a plurality of adjacent battery cells (10).

10. A battery cell, wherein the battery cell is wrapped with an insulating film (20) according to any one of claims 1 to 8.

11. The battery cell according to claim 10, where in N is 4, and the battery cell is a cuboid with a bottom wall (111), two wide side walls (112), two narrow side walls (113) and a cover plate (114); wherein an area of the wide side wall (112) is greater than that of the narrow side wall (113), the bottom coverage area (21) of the insulating film covers the bottom wall (111) , the four side coverage areas (221-224) of the insulating film comprise two wide side coverage areas (221 and 223) and two narrow side coverage areas (222 and 224), wherein an area of the wide side coverage area (221 and 223) is greater than that of the narrow side coverage area (222 and 224), the two wide side coverage areas (221 and 223) cover the two wide side walls (112) respectively, and the two narrow side coverage areas (222 and 224) cover the two narrow side walls (113) respectively; in each of the four pairs of bonding areas of the insulating film, the width of the first bonding area adjacent to the wide side coverage area is greater than the width of the second bonding area adjacent to the narrow side coverage area, and each pair of bonding areas bends to the adjacent narrow side coverage area after bonding on a surface towards one side of the battery cell; the part that is not bonded with the second bonding area in the first bonding area bonds to the adjacent narrow side coverage area.

12. A battery, comprising: the battery cell (10) according to claim 10 or 11.

13. A power consumption device, comprising: the battery according to claim 12, and the battery being configured to provide electric energy.

14. A method for producing a battery cell, comprising:
providing (310) the battery cell (10);
providing (320) the insulating film (20) according to any one of claims 1 to 8;
using the insulating film (20) to wrap (330) the battery cell (10).

## Patentansprüche

1. Isolierende Folie, die konfiguriert ist, eine Batterieanordnung zu umwickeln, wobei die isolierende Folie einen unteren Bedeckungsbereich (21), N Seitenbedeckungsbereiche (221-224) und N Paare von Klebebereichen (231-238) besitzt, wobei N eine ganze Zahl ist, die größer als 2 ist;
wobei der untere Bedeckungsbereich (21) N Seiten (211-214) aufweist und die N Seitenbedeckungsbereiche (221-224) jeweils mit dem unteren Bedeckungsbereich (21) an den N Seiten (211-214) verbunden sind und sich jeweils in Richtung des unteren Bedeckungsbereichs (21) entlang der N Seiten (211-214) biegen können;
wobei sich jedes Paar der N Paare von Klebebereichen (231-238) zwischen zwei benachbarten Seitenbedeckungsbereichen der N Seitenbedeckungsbereiche (221-224) befindet und jeweils mit den zwei benachbarten Seitenbedeckungsbereichen verbunden ist; wobei jedes Paar der Klebebereiche konfiguriert ist, zu erreichen, dass der untere Bedeckungsbereich (21) und die N Seitenbedeckungsbereiche (221-224) einen Raum bilden, der die Batterieanordnung durch Klebebereiche auf derselben Seite jedes Paars der Klebebereiche umwickelt, wenn die N Seitenbedeckungsbereiche (221-224) in Richtung des unteren Bedeckungsbereichs (21) gebogen sind;
wobei eine Breite eines ersten Klebebereichs in jedem Paar von Klebebereichen größer als eine Breite eines zweiten Klebebereichs ist und sich nach dem Verkleben jedes Paars der Klebebereiche in Richtung des Seitenbedeckungsbereich angrenzend an den zweiten Klebebereich biegen kann, wobei der Teil, der nicht mit dem zweiten Klebebereich in dem ersten Klebebereich verklebt ist, konfiguriert ist, an dem Seitenbedeckungsbereich angrenzend an den zweiten Klebebereich zu kleben.

2. Isolierende Folie nach Anspruch 1, wobei sich jedes Paar von Klebebereichen jeweils entlang der Verbindungsseite mit dem Seitenbedeckungsbereich biegen kann, um die Oberfläche auf derselben Seite jedes Paars von Klebebereichen zu verkleben.

3. Isolierende Folie nach Anspruch 1, wobei N gleich 4 ist und die isolierende Folie konfiguriert ist, eine quaderförmige Batterieanordnung zu umwickeln.

4. Isolierende Folie nach Anspruch 3, wobei sowohl der untere Bedeckungsbereich (21) als auch vier Seitenbedeckungsbereiche (221-224) rechteckig sind und der ausgedehnte Zustand der isolierenden Folie eine Kreuzform ist.

5. Isolierende Folie nach Anspruch 4, wobei in dem ausgedehnten Zustand der isolierenden Folie jedes Paar von Klebebereichen eine L-Form darstellt.

6. Isolierende Folie nach Anspruch 1, wobei die Breite des ersten Klebebereichs weniger als eine Hälfte der Breite des Seitenbedeckungsbereichs angrenzend an den zweiten Klebebereich ist.

7. Isolierende Folie nach einem der Ansprüche 1 bis 6, wobei ein Material der isolierenden Folie ein wasserfestes Material ist.

8. Isolierende Folie nach einem der Ansprüche 1 bis 7, wobei die Batterieanordnung eine Batteriezelle (10) ist.

9. Isolierende Folie nach einem der Ansprüche 1 bis 7, wobei die Batterieanordnung eine Batteriezellengruppe ist und die Batteriezellengruppenanordnung mehrere benachbarte Batteriezellen (10) umfasst.

10. Batteriezelle, wobei die Batteriezelle mit einer isolierenden Folie (20) nach einem der Ansprüche 1 bis 8 umwickelt ist.

11. Batteriezelle nach Anspruch 10, wobei N gleich 4 ist und die Batteriezelle ein Quader mit einer unteren Wand (111), zwei breiten Seitenwänden (112), zwei schmalen Seitenwänden (113) und einer Deckplatte (114) ist; wobei ein Bereich der breiten Seitenwand (112) größer als jener der schmalen Seitenwand (113) ist, der untere Bedeckungsbereich (21) der isolierenden Folie die untere Wand (111) bedeckt, die vier Seitenbedeckungsbereiche (221-224) der isolierenden Folie zwei breite Seitenbedeckungsbereiche (221 und 223) und zwei schmale Seitenbedeckungsbereiche (222 und 224) umfassen, wobei ein Bereich des breiten Seitenbedeckungsbereichs (221 und 223) größer als jener des schmalen Seitenbedeckungsbereichs (222 und 224) ist, die beiden breiten Seitenbedeckungsbereiche (221 und 223) jeweils die beiden breiten Seitenwände (112) bedecken und die beiden schmalen Seitenbedeckungsbereiche (222 und 224) jeweils die beiden schmalen Seitenwände (113) bedecken; wobei in jedem der vier Paare von Klebebereichen der isolierenden Folie die Breite des ersten Klebebereichs angrenzend an den breiten Seitenbedeckungsbereich größer als die Breite des zweiten Klebebereichs angrenzend an den schmalen Seitenbedeckungsbereich ist und sich jedes Paar der Klebebereiche zu dem angrenzenden schmalen Seitenbedeckungsbereich nach dem Verkleben auf eine Oberfläche in Richtung einer Seite der Batteriezelle biegt; wobei der Teil, der nicht mit dem zweiten Klebebereich in dem ersten Klebebereich verklebt ist, an dem angrenzenden schmalen Seitenbedeckungsbereich klebt.

12. Batterie, die Folgendes umfasst: die Batteriezelle (10) nach Anspruch 10 oder 11.

13. Stromverbrauchsvorrichtung, die Folgendes umfasst:
die Batterie nach Anspruch 12, wobei die Batterie konfiguriert ist, elektrische Energie zu liefern.

14. Verfahren zum Herstellen einer Batteriezelle, das Folgendes umfasst:
Bereitstellen (310) der Batteriezelle (10);
Bereitstellen (320) der isolierenden Folie (20) nach einem der Ansprüche 1 bis 8;
Verwenden der isolierenden Folie (20), um die Batteriezelle (10) zu umwickeln (330).

## Revendications

1. Film isolant, configuré pour envelopper un ensemble batterie, le film isolant comprenant une zone de recouvrement inférieur (21), N zones de recouvrement latéral (221-224) et N paires de zones d'assemblage (231-238), N étant un entier supérieur à 2 ;
la zone de recouvrement inférieur (21) ayant N côtés (211-214), et les N zones de recouvrement latéral (221-224) étant respectivement raccordées à la zone de recouvrement inférieur (21) au niveau des N côtés (211-214), et pouvant se plier vers la zone de recouvrement inférieur (21) le long des N côtés (211-214), respectivement ;
chaque paire des N paires de zones d'assemblage (231-238) étant située entre deux zones de recouvrement latéral adjacentes parmi les N zones de recouvrement latéral (221-224), et étant raccordée aux deux zones de recouvrement latéral adjacentes, respectivement ; chaque paire de zones d'assemblage étant configurée pour faire en sorte que la zone de recouvrement inférieur (21) et les N zones de recouvrement latéral (221-224) forment un espace enveloppant l'ensemble batterie par assemblage de surfaces sur le même côté de chaque paire de zones d'assemblage quand les N zones de recouvrement latéral (221-224) se plient vers la zone de recouvrement inférieur (21) ;
dans lequel une largeur d'une première zone d'assemblage dans chaque paire de zones d'assemblage est supérieure à une largeur d'une deuxième zone d'assemblage, et après assemblage, chaque paire de zones d'assemblage peut se plier vers la zone de recouvrement latéral adjacente à la deuxième zone d'assemblage, dans lequel la partie qui n'est pas assemblée avec la deuxième zone d'assemblage dans la première zone d'assemblage est configurée pour s'assembler avec la zone de recouvrement latéral adjacente à la deuxième zone d'assemblage.

2. Film isolant selon la revendication 1, dans lequel chaque paire de zones d'assemblage peut respectivement se plier le long du côté de raccordement avec la zone de recouvrement latéral pour assembler les surfaces sur le même côté de chaque paire de zones d'assemblage.

3. Film isolant selon la revendication 1, N valant 4, et le film isolant étant configuré pour envelopper un ensemble batterie de forme cuboïde.

4. Film isolant selon la revendication 3, dans lequel à la fois la zone de recouvrement inférieur (21) et les quatre zones de recouvrement latéral (221-224) sont rectangulaires, et l'état déployé du film isolant est en forme de croix.

5. Film isolant selon la revendication 4 dans lequel, dans l'état déployé du film isolant, chaque paire de zones d'assemblage se présente comme une forme en L.

6. Film isolant selon la revendication 1, dans lequel la largeur de la première zone d'assemblage est inférieure à la moitié de la largeur de la zone de recouvrement latéral adjacente à la deuxième zone d'assemblage.

7. Film isolant selon l'une quelconque des revendications 1 à 6, un matériau du film isolant étant un matériau étanche à l'eau.

8. Film isolant selon l'une quelconque des revendications 1 à 7, l'ensemble batterie étant un élément de batterie (10) .

9. Film isolant selon l'une quelconque des revendications 1 à 7, l'ensemble batterie étant un groupe d'éléments de batterie, et l'ensemble groupe d'éléments de batterie comprenant une pluralité d'éléments de batterie (10) adjacents.

10. Elément de batterie, l'élément de batterie étant enveloppé avec un film isolant (20) selon l'une quelconque des revendications 1 à 8.

11. Elément de batterie selon la revendication 10, N valant 4, et l'élément de batterie étant un cuboïde avec une paroi inférieure (111), deux parois latérales larges (112), deux parois latérales étroites (113) et un couvercle (114) ; dans lequel une superficie de la paroi latérale large (112) est supérieure à celle de la paroi latérale étroite (113), la zone de recouvrement inférieur (21) du film isolant recouvre la paroi inférieure (111), les quatre zones de recouvrement latéral (221-224) du film isolant comprennent deux zones de recouvrement latéral larges (221 et 223) et deux zones de recouvrement latéral étroites (222 et 224), dans lequel une superficie de la zone de recouvrement latéral large (221 et 223) est supérieure à celle de la zone de recouvrement latéral étroite (222 et 224), les deux zones de recouvrement latéral larges (221 et 223) recouvrent les deux parois latérales larges (112), respectivement, et les deux zones de recouvrement latéral étroites (222 et 224) recouvrent les deux parois latérales étroites (113), respectivement ; dans chacune des quatre paires de zones d'assemblage du film isolant, la largeur de la première zone d'assemblage adjacente à la zone de recouvrement latéral large est supérieure à la largeur de la deuxième zone d'assemblage adjacente à la zone de recouvrement latéral étroite, et chaque paire de zones d'assemblage se plie vers la zone de recouvrement latéral étroite adjacente après assemblage sur une surface vers un côté de l'élément de batterie ; la partie qui n'est pas assemblée avec la deuxième zone d'assemblage dans la première zone d'assemblage s'assemble avec la zone de recouvrement latéral étroite adjacente.

12. Batterie, comprenant : l'élément de batterie (10) selon la revendication 10 ou 11.

13. Dispositif de consommation d'énergie, comprenant :
la batterie selon la revendication 12, la batterie étant configurée pour fournir de l'énergie électrique.

14. Procédé de production d'un élément de batterie, comprenant :
l'obtention (310) de l'élément de batterie (10) ;
l'obtention (320) du film isolant (20) selon l'une quelconque des revendications 1 à 8 ;
l'utilisation du film isolant (20) pour envelopper (330) l'élément de batterie (10).
